# EUROPÄISCHE PATENTSCHRIFT

(11) **EP 4 048 969 B1**
(45) Veröffentlichungstag und Bekanntmachung des Hinweises auf die Patenterteilung: **30.09.2026**
(21) Anmeldenummer: 20775200.7
(22) Anmeldetag: 08.09.2020
(51) Int. Cl.: F28D 20/02

(54) **WÄRMESPEICHEREINHEIT**
HEAT STORAGE UNIT
UNITÉ DE STOCKAGE DE CHALEUR

(30) Priorität: 25.10.2019 DE 202019105940 U
(43) Veröffentlichungstag der Anmeldung: 31.08.2022
(73) Patentinhaber: Piller, Thomas, 71254 Ditzingen (DE)
(72) Erfinder: Piller, Thomas, 71254 Ditzingen (DE)
(74) Vertreter: Fleck, Hermann-Josef
(86) Internationale Anmeldenummer: PCT/EP2020/075055
(87) Internationale Veröffentlichungsnummer: WO 2021/078437

(56) Entgegenhaltungen:
- EP-A1- 2 468 977
- EP-A2- 2 713 130
- WO-A1-2010/092391
- DE-A1- 102011 053 788
- DE-A1- 102015 205 626

## Beschreibung

Die Erfindung bezieht sich auf eine Wärmespeichereinheit mit mindestens einem Speicherblock, der mit PCM-Material befüllt ist.

Eine Wärmespeichereinheit dieser Art ist in der EP 2 468 977 A1 gezeigt. Diese bekannte Wärmespeichereinheit ist flächig mit mehreren seitlich aneinandergereihten Flächenelementen ausgebildet, die eine wärmeleitende Hülle aufweisen, welche ein Phasenwechselmaterial umgibt. Das Flächenelement steht direkt oder indirekt mit einer Heiz- bzw. Kühlleitung in wärmeleitender Verbindung. Die Hüllen, die als Hohlprofile ausgebildet sein können und mit ihren schmalen Seitenflächen aneinanderliegen, weisen in den schmalen Seitenflächen Vertiefungen zur Aufnahme der Heiz- bzw. Kühlleitung auf und können an den aneinanderliegenden schmalen Seitenflächen mit Profilelementen für eine formschlüssige Verbindung versehen sein. Die Flächenelemente sind beispielsweise zum Aufbau einer Platte, z. B. für eine Klimadecke, ausgebildet.

Auch die DE 10 2011 053 788 A1 zeigt eine Wärmespeichereinheit mit flächigem Grundkörper, der mindestens einen Leitungskanal zum Durchleiten des Wärmeträgermediums und mindestens eine Hohlkammer zum Aufnehmen eines Latentwärmespeichermediums aufweist. Mehrere solcher Grundkörper-Bahnen können nebeneinander verlegt und zu einem Gesamt-Körper verbunden werden. Diese Wärmespeichereinheit dient z. B. zur Verwendung als Fußbodenheizung oder als thermischer Solarkollektor, also zur Verwendung als flächige Gebilde.

Eine Wärmespeichereinheit dieser Art ist in der DE 20 2018 100 856 U1 gezeigt. Bei dieser bekannten Wärmespeichereinheit ist ein Wärmespeicher bzw. Pufferspeicher, der zum Liefern von Brauchwasser, insbesondere Heizungs- und/oder Trinkwasser ausgebildet ist, außen auf seiner Behälterwand wärmeleitend mit einem taschenartigen Träger umgeben, in den ein Phasenwechselmaterial (PCM-Material) eingefüllt ist. Mittels des Phasenwechselmaterials kann in an sich bekannter Weise Wärme latent, d. h. im Wesentlichen ohne Temperaturänderung, in Folge eines Phasenwechsels, gespeichert werden.

Die DE 10 2017 125 669 A1 zeigt eine gebündelte Anordnung von z. B. rotationssymmetrischen Hohlkörpern als Wärmespeicherelemente, in denen Latentwärmespeichermedium aufgenommen wird. Die Wärmespeicherelemente sind in einem ersten Behälterabschnitt eines Behälters angeordnet und zu einem zweiten Behälterabschnitt des Behälters hin offen. Die Wärmespeicherelemente mit dem Latentwärmespeichermedium werden in dem ersten Behälterabschnitt von einem Wärmeträgermedium (insbesondere Wasser) umspült, das durch einen dritten Hohlraum des Behälters fließt, welcher den zweiten Behälterabschnitt umgibt. Mit den offenen Wärmespeicherelementen sollen Volumenänderungen des Wärmespeichermediums ermöglicht und gleiche thermodynamische Gleichgewichtszustände in den Wärmespeicherelementen erreicht werden.

Die DE 10 2011 004 202 A1 zeigt ein Latentwärmespeicherelement mit kreiszylinderförmiger Außenform, in dem Latentwärmespeichermaterial zusammen mit einer Matrix aus einem Material mit gegenüber dem Latentwärmespeichermaterial erhöhter Wärmeleitfähigkeit aufgenommen ist. Bei einer Anordnung mehrerer derartiger Latentwärmespeicherelemente in einem Energiespeicher werden die einzelnen Latentwärmespeicherelemente von einem Wärmeträgerfluid umspült.

Die DE 20 2010 000 027 A1 zeigt einen weiteren Latentwärmespeicher mit einer in einem Behälter angeordneten und darin mittels einer Stützkonstruktion gehaltenen Leitungsanordnung, in dem ein Wärmeträgerfluid geführt ist, wobei in dem von dem Außenmantel umgebenen Hohlraum das Wärmespeichermedium in wärmeleitendem Kontakt mit dem Leitungssystem angeordnet ist.

Die DE 10 2009 036 550 A1 zeigt ebenfalls ein Latentwärmespeichersystem. Hierbei sind für das das Wärmeträgermedium führende Rohrleitungssystem und das Wärmespeichermedium zwei Teilbereiche gebildet und das Wärmeträgermedium (Arbeitsmedium) wird zudem durch Strömungsräume geführt, die in dem Speichermedium selbst ausgebildet sind. Das Speichermedium ist hierbei z. B. als von Strömungsräumen durchzogener einstückiger, monolithischer Feststoffkörper oder als Schüttgut-Feststoffkörper ausgebildet.

Auch die DE 10 2011 107 270 A1 zeigt einen Wärmespeicher mit einem Behälter, in den ein Fluid, insbesondere Wasser, gefüllt ist, in Verbindung mit einer Anordnung von Phasenwechselmaterial zum Speichern von Wärmeenergie. Das Phasenwechselmaterial ist dabei in wärmeleitend mit dem Fluid in Verbindung stehenden Körpern in dem Fluid angeordnet oder in einer anderen Ausführung in einer Speichererweiterung in Form einer schalen- oder schichtenförmigen zusätzlichen Ummantelung außen auf dem Behälter untergebracht. Dabei sind auch Schichtwärmespeicher angegeben, wobei die Schichten Fluid mit unterschiedlichen Temperaturen aufweisen und den Schichten Phasenwechselmaterialien mit unterschiedlicher Umwandlungs- bzw. Übergangstemperatur (Schwellentemperatur) zugeordnet sind.

Bei einer in der DE 10 2013 114 507 B3 gezeigten weiteren Ausführungsform für eine Wärmespeichereinheit ist ein Behälter mit einer Mischung aus Phasenwechselmaterial und Grafitpulver offenbart. Das Phasenwechselmaterial ist dabei in einen Raum zwischen einer inneren und äußeren Behälterwand eingebracht.

In der US 2011/0239673 A1 ist ein Gerät zur Erwärmung von Wasser mit einem Warmwasserspeicherbehälter, einer Heizanordnung, die vorgesehen ist, um Wasser in den Speicherbehälter zu erhitzen, und einer Wärmeaustauschvorrichtung dargestellt, die in der Wärmespeichereinheit in einer festen Beziehung relativ zu einer Position der Heizanordnung angeordnet ist, wobei die Wärmeaustauschvorrichtung einen hohlen Gegenstand und einen Phasenwechselmaterial innerhalb des hohlen Objekts umfasst.

Weitere ähnliche Einrichtungen zur Wärmespeicherung sind in der WO 2012/167934 A2, der WO 2015/121039 A1 und der CN 201 503 U sowie auch in der DE 20 2016 102 914 U1 gezeigt, welche einen Pufferspeicher zeigt, in dem Phasenwechselmaterial mittels einer Trägervorrichtung in dem Wasser des Pufferspeichers positioniert wird.

Bei der Ausrüstung der Speicherbehälter mit dem Phasenwechselmaterial ist stets ein nicht unerheblicher Aufwand und gegebenenfalls auch Platzbedarf erforderlich.

Bekannte Ausführungen der genannten Art von Wärmespeichersystemen weisen relativ umfangreiche konstruktive Maßnahmen auf, die einfachen Einbau-, Ergänzungs- und Umrüstmöglichkeiten entgegenstehen.

Der vorliegenden Erfindung liegt die Aufgabe zugrunde, eine Wärmespeichereinheit bereitzustellen, die möglichst wenig Herstellungsaufwand und möglichst weitgehende Verwendungsmöglichkeiten insbesondere im Zusammenhang mit Speicherbehältern für Warmwasser oder ähnliche Fluide ergibt.

Diese Aufgabe wird bei einer Wärmespeichereinheit mit den Merkmalen des Anspruchs 1 gelöst. Hierbei ist vorgesehen, dass durch den Speicherblock eine Leitungsanordnung zum Durchleiten eines Wärme transportierenden Fluids geführt ist, dass der Speicherblock als Bündel aus mehreren parallel zueinander verlaufenden, mit Wandabschnitten ihrer Umfangswandung dicht (unmittelbar oder über eine gut wärmeleitende dünne Zwischenschicht) aneinanderliegenden, längserstreckten geschlossenen Hohlkammern ausgestaltet ist, die jeweils mit PCM-Material befüllt sind, dass die Umfangswandungen jeweils mit in Längsrichtung verlaufenden Einmuldungen versehen sind, und dass die Leitungsanordnung mindestens eine Leitung mit mehreren Leitungsabschnitten aufweist, die in die Einmuldungen in unmittelbarem oder über ein Wärmeleitmittel hergestelltem Kontakt wärmeleitend mit den angrenzenden Bereichen der Umfangswandung und darüber mit dem PCM-Material verbunden sind.

Der so als Bündel aus mehreren dicht und wärmeleitend mit ihren Umfangswandungen aneinanderliegenden, allseitig (bei eingefülltem PCM-Material) geschlossenen Hohlkammern und dem darin aufgenommenen Phasenwechselmaterial ausgestaltete Speicherblock ergibt eine kompakte wärmespeichernde Einheit, die also z. B. nicht in einem mit Flüssigkeit befüllten Behälter eingebaut und aufgrund ihres Aufbaus einfach handhabbar ist und räumlich gute Unterbringungsmöglichkeiten bietet. Das Bündel kann z. B. über außen angelegte Gurte und/oder eine z. B. wärmeisolierende Umhüllung und/oder gut wärmeleitende stoffliche Verbindung untereinander zusammengehalten sein. Die Wandstärken der Umfangswandungen der Hohlkammern lassen sich dünn, z. B. im Bereich eines oder mehrerer mm, z. B. zwischen 0,5 und 3 oder 4 mm, ausführen, und die Querschnittsabmessungen der Kammern können z. B. bei quadratischem oder rechteckförmigem Querschnitt, etwa zwischen 0,5 cm und 3 cm oder 5 cm oder 8 cm liegen, oder gegebenenfalls auch von diesen Abmessungen abweichen, je nach erforderlicher Größe bzw. Speicherkapazität des Speicherblocks.

Vorteilhafte Ausgestaltungen sind in den Unteransprüchen angegeben. Für die Funktionsweise und einen kompakten Aufbau sind die Maßnahmen von Vorteil, dass die allseitig geschlossenen Hohlkammern jeweils aus ringsum geschlossenen Hohlprofilstäben gebildet sind. Die Hohlprofilstäbe lassen sich einfach in geeigneter Länge (z. B. durch Ablängen eines längeren Hohlprofilstabs) und Anzahl bereitstellen. Sie sind auf einer Stirnseite (bei senkrechter Aufstellung auf der unteren Seite) vorzugsweise fest verschlossen und im befüllten Zustand auch auf der anderen Seite (bei senkrechter Aufstellung auf der oberen Seite) fest oder vorzugsweise öffenbar mit einem Deckelteil verschlossen, wobei über den Deckelteil auch eventuelle Volumenänderungen ausgleichbar sind.

Für die Bündelung und kompakte Zusammenstellung mit guten Wärmeübergängen sind die Maßnahmen von Vorteil, dass die Hohlprofilstäbe bis auf die Einmuldungen mehreckigen, insbesondere quadratischen oder rechteckförmigen, Querschnitt aufweisen.

Die Einmuldungen sind
- bezüglich einer gedachten nicht eingemuldeten Form - entlang der Kanten der Umfangswandung angeordnet.

Für die Aufnahme der Leitungsabschnitte und gute Wärmeübergänge sowie kompakte Ausgestaltung sind die Maßnahmen von Vorteil, dass die Einmuldungen in den Umfangswandungen mehrerer einander benachbarter Hohlkammern sich im Querschnitt zu einem geschlossenen, insbesondere kreisförmigen, Ring ergänzen. Dabei lassen sich die Leitungsabschnitte dicht und in engem Kontakt mit den sie umgebenden Wandabschnitten z. B. mittels eines Klebers bzw. Dichtungsmaterials einfügen, so dass z. B. auch Beschädigungen zwischen unterschiedlichen Materialien, insbesondere Metallen, in Folge verschiedener elektrochemischer Potentiale bei gleichzeitig gutem Wärmeübergang vermeiden lassen.

Ein kompakter Aufbau wird dadurch erreicht, dass in der in x-y-Richtung ausgedehnten Querschnittsebene sowohl in x-Richtung als auch in y-Richtung des Speicherblocks mehrere Hohlkammern mit ihren Umfangswandungen aneinandergrenzend angeordnet sind.

Ein besonders guter Wärmeübergang zwischen dem die Leitungsabschnitte durchfließenden Fluid, insbesondere Wasser, und dem Phasenwechselmaterial wird dadurch erreicht, dass die Umfangswandungen der Hohlkammern aus Metall, insbesondere Aluminium, bestehen.

Eine für die Herstellung und Funktion mit gutem Wärmeübergang weitere vorteilhafte Ausgestaltung besteht darin, dass die Leitungsabschnitte aus Metall, insbesondere aus Kupfer, bestehen.

Für den Anschluss an einen Speicherbehälter, wie Warmwasserbehälter, ist vorteilhaft vorgesehen, dass die Leitungsanordnung mindestens einen Eingangsabschnitt und mindestens einen Ausgangsabschnitt zum Anschluss an einen Warmwasserspeicher aufweist. An einem Eingangsabschnitt bzw. Ausgangsabschnitt kann entweder eine Leitung angeschlossen sein, die den gesamten Speicherblock zwischen den Hohlkammern bzw. deren Umfangswandungen durchzieht, oder es können von einem Eingangsabschnitt bzw. Ausgangsabschnitt mehrere Leitungsabschnitte parallel abzweigen, so dass z. B. eine geringere Durchflussgeschwindigkeit durch die einzelnen Leitungsabschnitte mit entsprechend den Wärmeübergangszeiten vorteilhaften Strömungsgeschwindigkeiten erhalten werden kann.

Unterschiedliche Größen von Wärmespeichereinheiten hinsichtlich Geometrie und/oder Wärmespeicherkapazität können einfach dadurch bereitgestellt werden, dass mehrere Speicherblöcke in Längsrichtung (z-Richtung) aneinanderliegend und/oder in Querrichtung (x-y-Richtung) nebeneinanderliegend zu einer Speicherblockeinheit zusammengefasst sind.

Innerhalb eines Speicherblocks können in den einzelnen Hohlkammern auch PCM-Materialien mit relativ zueinander unterschiedlichen Umwandlungstemperaturen, wie z. B in geeigneten Gruppierungen von Hohlkammern eingefüllt werden, wobei auch die Leitungsanordnung mit mehreren Eingangsabschnitten und Ausgangsabschnitten sowie zugeordneten Leitungsabschnitten versehen sein kann, um z. B. Wärme entsprechend der Temperatur unterschiedlicher Fluidschichten bzw. Wasserschichten innerhalb des Speicherbehälters angemessen bzw. gezielt zu speichern.

Die Erfindung wird nachfolgend anhand von Ausführungsbeispielen unter Bezugnahme auf die Zeichnungen näher erläutert. Es zeigen:
- Fig. 1A: eine Wärmespeichereinheit mit einem Speicherblock in perspektivischer Ansicht,
- Fig. 1B: einen vergrößerten Ausschnitt A des Speicherblocks nach Fig. 1A,
- Fig. 2A: eine Wärmespeichereinheit mit einem Wärmespeicherblock in seitlicher Ansicht,
- Fig. 2B: die Wärmespeichereinheit nach Fig. 2A in Draufsicht in Richtung der Längsachse,
- Fig. 2C: die Wärmespeichereinheit nach Fig. 2B mit einer thermischen Außenisolation
- Fig. 3A: einen Hohlprofilstab des Speicherblocks nach Fig. 2A in seitlicher Ansicht,
- Fig. 3B: einen Hohlprofilstab in Draufsicht in Richtung der Längsachse und
- Fig. 3C: den Hohlprofilstab nach Fig. 3A in perspektivischer Ansicht.

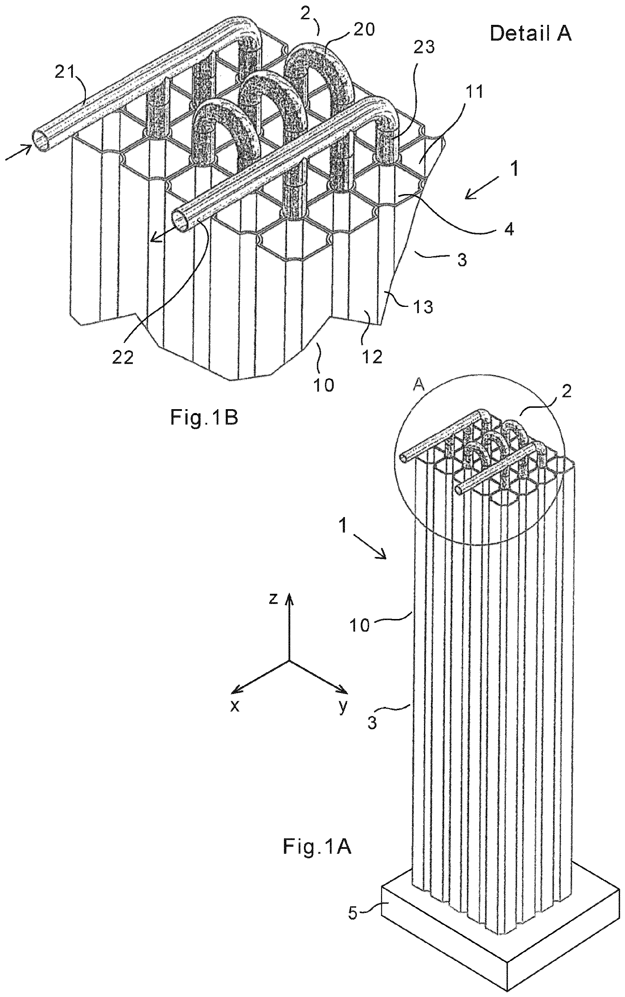

Fig. 1A zeigt einen sich entlang einer Längsachse (in Richtung z) erstreckenden Speicherblock 3 einer Wärmespeichereinheit 1 mit einem Bündel aus eng zusammengefassten, Hohlkammern bildenden Hohlprofilstäben 10 und einer Leitungsanordnung 2 mit in Längsrichtung zwischen den Hohlprofilstäben 10 verlaufenden Leitungsabschnitten 23 (vgl. vergrößerten Ausschnitt A in Fig. 1B). Die Leitungsabschnitte bilden Teile von Leitungen 20, die eingangsseitig mit einem Eingangsabschnitt 21 und ausgangsseitig mit einem Ausgangsabschnitt 2 zum Zuführen bzw. Abführen eines Fluids, insbesondere einer Flüssigkeit, vorzugsweise Wasser oder einer ähnlichen Flüssigkeit, verbunden sind.

Die Ausbildung der Hohlkammern aus den Hohlprofilstäben 10 ergibt gut an jeweilige Erfordernisse anpassbare Gestaltungsmöglichkeiten für Speicherblöcke 3. Die Hohlprofilstäbe 10 können in gewünschter Länge aus längeren Hohlprofilen abgelängt werden. Sie werden nach Einfüllen des PCM-Materials stirnseitig dicht abgeschlossen, wobei der Abschluss der einen (bei senkrechter Aufstellung unteren) Stirnseite vorteilhaft fest angebracht ist und der Abschluss auf der anderen (bei senkrechter Aufstellung oberen) Stirnseite vorteilhaft abnehmbar als Deckelteil angebracht ist. Der Deckelteil ist vorzugsweise so ausgestaltet bzw. angebracht, dass er auf Volumenänderungen des PCM-Materials reagieren kann. Der gesamte Speicherblock 3 kann z. B. auf einem stabilen Sockel 5 stehend oder auf Tragestreben oder dergleichen liegend positioniert werden.

Wie Fig. 1B vergrößert zeigt, sind die Leitungsabschnitte 23 in Einmuldungen 13 in den Umfangswandungen der Hohlprofilstäbe 10 eingesetzt und über bogenförmige Abschnitte untereinander verbunden sowie an ihren eingangsseitigen Enden mit dem Eingangsabschnitt 21 und an ihren ausgangsseitigen Enden mit dem Ausgangsabschnitt 22 fluidleitend verbunden. In den Hohlräumen 11 der rundum und auch stirnseitig dicht abgeschlossenen Hohlprofilstäbe 10 ist Phasenwechselmaterial (PCM-Material) eingefüllt, welches bei einer bestimmten Umwandlungstemperatur in Folge eines Phasenwechsels latent Wärme speichert bzw. aufnimmt, d. h. ohne seine Temperatur (wesentlich) zu ändern, und auch wieder ohne Temperaturänderung Wärme abgeben kann, wie z. B. in den eingangs genannten Druckschriften näher erläutert ist. Die Schwellentemperatur, bei der die Phasenumwandlung bzw. Wärmespeicherung und Wärmeabgabe ohne Temperaturänderung stattfindet, ist dabei von der Art des PCM-Materials abhängig und z. B. in einem für die Konstanthaltung einer Wassertemperatur im Rahmen seiner Speicherkapazität zweckmäßigen Temperaturbereich zwischen z. B. 35 °C und 80 °C, wie für Wasserspeicher günstig, festgelegt. Im Zusammenhang mit einem mittels Solarenergie beheizten Warmwasserbehälter ist es vorteilhaft, ein oder mehrere PCM-Materialien mit einer Schwellentemperatur im Bereich zwischen 55 °C und 80 °C zu wählen.

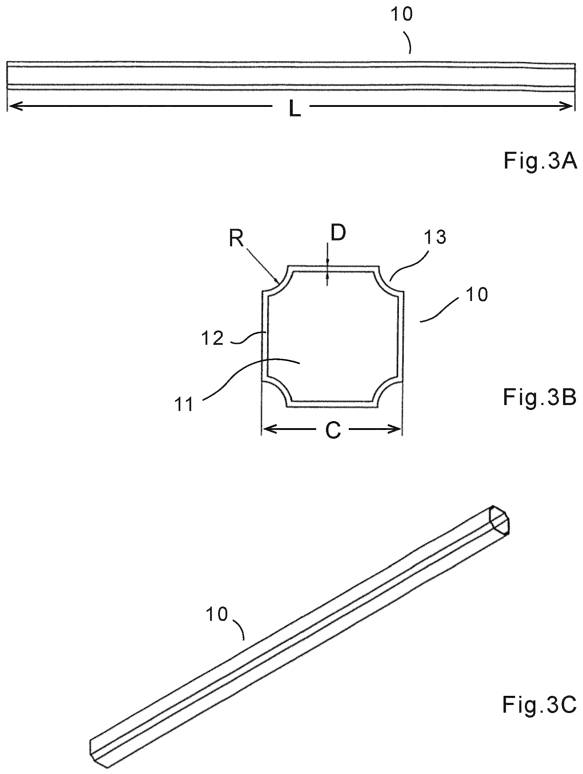

Die Hohlprofilstäbe 10 bestehen aus einem gut wärmeleitenden Material, insbesondere Metall, vorzugsweise Aluminium, und besitzen vorteilhaft mehreckigen, vorzugsweise rechteckigen oder quadratischen, Querschnitt bis auf die Einmuldungen 13, die vorliegend entlang der Kantenbereiche der Hohlprofilstäbe 10 ausgebildet sind (vgl. Fig. 3B). In die im Querschnitt gerundeten, vorliegend viertelkreisförmigen Einmuldungen sind die im Querschnitt entsprechend angepassten, vorliegend also ebenfalls gerundeten, vorliegend kreisförmigen Leitungsabschnitte 23 dicht anliegend eingesetzt, um eine gute Wärmeleitung von dem Fluid über die Leitungswandung und die Umfangswandung 12 der Hohlprofilstäbe 10 zu dem PCM-Material herzustellen. Vorteilhaft ist im Übergangsbereich zwischen den Umfangsflächen der Leitungsabschnitte 23 und den Einmuldungen 13 gut wärmeleitendes Dichtungsmaterial bzw. Klebermaterial eingebracht, um Feuchtigkeitseinlagerungen auszuschließen. Damit können auch negative Einflüsse von elektrochemischen Potentialen zwischen verschiedenen Metallen der Leitungsabschnitte 23 und den Hohlprofilstäben 10 vermieden werden, wenn z. B. die Leitungsabschnitte 23 bzw. Leitungen 20 aus Kupfer und die Hohlprofilstäbe 10 aus Aluminium hergestellt sind. Die Hohlprofilstäbe 10 und die Leitungen 20 können aber auch aus gleichen oder ähnlichen, jedenfalls gut wärmeleitenden Metallen hergestellt sein.

Vorliegend grenzen vier Hohlprofilstäbe 10 in ihrem Kantenbereich aneinander bzw. sind sich dort benachbart, wobei die Einmuldungen 13 im Querschnitt jeweils einen Viertelkreis einschließen, insgesamt also den betreffenden Leitungsabschnitt 23 ringsum kreisförmig (praktisch ohne Zwischenspalt) umgeben. Im Übrigen liegen die Hohlprofilstäbe 10 mit den flachen Seiten ihrer Umfangswandung 12 entlang ihrer benachbarten Seiten eng aneinander. In einer in x-Richtung und y-Richtung liegenden, zur Längserstreckung z senkrechten Ebene sind mehrere Hohlprofilstäbe 10 in Reihen und Spalten nebeneinander angeordnet, so dass sich der bündelartig aufgebaute Speicherblock 3 ergibt. Über den Eingangsabschnitt 21 und den Ausgangsabschnitt 22 kann der Speicherblock 3 an ein Fluidreservoir, insbesondere einen Warmwasserbehälter, zur Zufuhr bzw. Abfuhr des zu temperierenden Fluids bzw. Wassers angeschlossen werden. Der Eingangsabschnitt oder gegebenenfalls mehrere Eingangsabschnitte 21 und/oder der oder gegebenenfalls mehrere Ausgangsabschnitte 22 kann bzw. können stirnseitig oder an einer oder mehreren Seiten eines Speicherblocks 3 abstehend für einen einfachen Anschluss angeordnet sein.

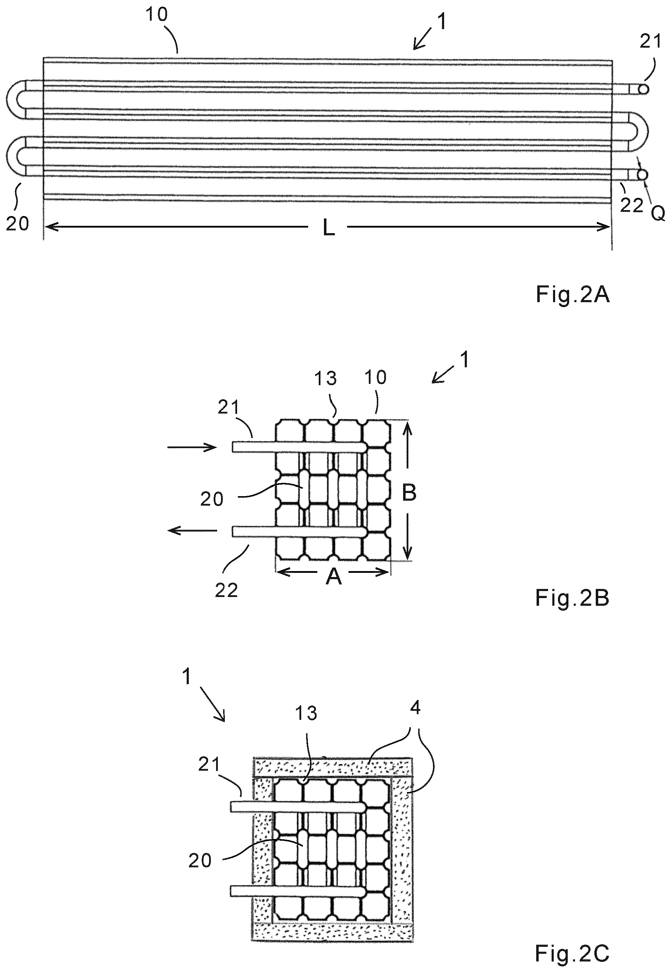

Es können Speicherblöcke 3 in unterschiedlicher Länge L sowie Breite B bzw. Dicke A (vgl. Fig. 2A und 2B) aufgebaut werden. Somit können Speicherblöcke 3 bereitgestellt werden, die insgesamt ein dem jeweiligen Wärmespeicherzweck angemessenes Hohlraumvolumen der Hohlräume 11 mit dem eingefüllten PCM-Material und damit eine angemessene Speicherkapazität ergeben. Auch der Querschnitt der Hohlräume 11 der einzelnen Hohlprofilstäbe 10 sowie auch die Stärke der Umfangswandung 12 können geeignet gewählt werden, wobei die Breite bzw. Dicke der einzelnen Hohlprofilstäbe 10 z. B. im Bereich zwischen 1 cm und 8 cm, wie z. B. 3 cm und 5 oder 6 cm liegen kann und die Stärke der Umfangswandung 12 im mm-Bereich, z. B. zwischen 0,5 und 3 mm liegen kann.

Um Schwellentemperaturen den Temperaturbereichen der unterschiedlichen Temperaturschichten innerhalb eines Warmwasserspeichers oder mehrerer Warmwasserspeicher anzupassen, können mehrere Speicherblöcke 3 des vorstehend beschriebenen Aufbaus zusammengefasst werden, die mit unterschiedlichem PCM-Material befüllt sind, beispielsweise mit Schwellentemperaturen von 40 °C, 50 °C, 60 °C und 70 °C oder 80 °C bzw. in diesen Bereichen. Alternativ können auch innerhalb eines Speicherblocks 3 in die Hohlräume 11 verschiedener Hohlprofilstäbe 10 PCM-Materialien mit unterschiedlicher Schwellentemperatur eingefüllt werden, wobei die Leitungsanordnung 2 mit zugeordneten Eingangsabschnitten 21, Ausgangsabschnitten 22 und Leitungsabschnitten 23 versehen ist.

Eine andere Ausgestaltungsvariante bzw. Möglichkeit der Anpassung an unterschiedliche Wärmespeicherkapazitäten kann mehrere Speicherblöcke 3 zusammengesetzt zu einer größeren Wärmespeichereinheit 1 umfassen, wobei z. B. mehrere Speicherblöcke 3 nebeneinander oder in Längsrichtung aneinandergereiht angeordnet sind.

Die Bündel aus den Hohlprofilstäben 10 werden z. B. mittels umlaufender Haltegurte bzw. einer Ummantelung zusammengehalten. Zudem kann die Wärmespeichereinheit 1 bzw. ein Speicherblock 3 von einer wärmeisolierenden Ummantelung, wie z. B. der in Fig. 2C gezeigten thermischen Außenisolation 4 aus vier flachen, plattenförmigen thermischen Isolierplatten, die beispielsweise mittels Klettverbindern an dem Speicherblock 3 abnehmbar angebracht sein können. Umfasst eine Wärmespeichereinheit 1 Hohlprofilstäbe 10, in die PCM-Materialien mit unterschiedlicher Schwellentemperatur eingefüllt sind, so können diejenigen mit niedrigerer Schwellentemperatur mehr außen und diejenigen mit höherer Schwellentemperatur mehr innen angeordnet sein, um einen Wärmeübergang zur Umgebung möglichst gering zu halten.

Der dargestellte Aufbau der Wärmespeichereinheit 1 mit mindestens einem Speicherblock 3 ergibt eine kompakte, gut handhabe Ausführung, die auch vorteilhaft an unterschiedliche räumliche Gegebenheiten angepasst werden kann.

## Patentansprüche

1. Wärmespeichereinheit (1) mit einer Leitungsanordnung (2) zum Durchleiten eines Wärme transportierenden Fluids mit mindestens einem Speicherblock (3), der mit PCM-Material (4) befüllt ist, wobei
- durch den Speicherblock (3) die Leitungsanordnung (2) geführt ist,
- der Speicherblock (3) als Bündel aus mehreren parallel zueinander verlaufenden, mit Wandabschnitten ihrer Umfangswandung (12) dicht aneinanderliegenden, längserstreckten, geschlossenen Hohlkammern ausgestaltet ist, die jeweils mit PCM-Material (4) befüllt sind,
- die aneinander liegenden Umfangswandungen (12) jeweils mit in Längsrichtung verlaufenden Einmuldungen (13) versehen sind, wobei die Einmuldungen (13) in den Umfangswandungen (12) mehrerer einander benachbarter Hohlkammern sich im Querschnitt zu einem geschlossenen, insbesondere kreisförmigen, Ring ergänzen und
- die Leitungsanordnung (2) mindestens eine Leitung (20) mit mehreren Leitungsabschnitten (23) aufweist, die in die Einmuldungen (13) in unmittelbarem oder über ein Wärmeleitmittel hergestelltem Kontakt wärmeleitend mit den angrenzenden Bereichen der Umfangswandung (12) und darüber mit dem PCM-Material (4) verbunden sind, und
- die Hohlkammern jeweils aus ringsum geschlossenen Hohlprofilstäben (10) gebildet sind, die bis auf die Einmuldungen (13) mehreckigen, insbesondere quadratischen oder rechteckförmigen, Querschnitt aufweisen,
**dadurch gekennzeichnet,**
**dass** in der in x-y-Richtung ausgedehnten Querschnittsebene sowohl in x-Richtung als auch in y-Richtung des Speicherblocks (3) mehrere Hohlkammern mit ihren Umfangswandungen (12) aneinandergrenzend angeordnet sind und dass die Einmuldungen (13) - bezüglich einer gedachten nicht eingemuldeten Form - entlang der Kanten der Umfangswandung (12) angeordnet sind.

2. Wärmespeichereinheit nach Anspruch 1,
**dadurch gekennzeichnet,**
**dass** die Umfangswandungen (12) der Hohlkammern aus Metall, insbesondere Aluminium, bestehen.

3. Wärmespeichereinheit nach einem der vorhergehenden Ansprüche,
**dadurch gekennzeichnet,**
**dass** die Leitungsabschnitte (23) aus Metall, insbesondere aus Kupfer, bestehen.

4. Wärmespeichereinheit nach einem der vorhergehenden Ansprüche,
**dadurch gekennzeichnet,**
**dass** die Leitungsanordnung (2) mindestens einen Eingangsabschnitt (21) und mindestens einen Ausgangsabschnitt (22) zum Anschluss an einen Warmwasserspeicher aufweist.

5. Wärmespeichereinheit nach einem der vorhergehenden Ansprüche,
**dadurch gekennzeichnet,**
**dass** mehrere Speicherblöcke (3) in Längsrichtung aneinanderliegend und/oder in Querrichtung nebeneinanderliegend zu einer Speicherblockeinheit zusammengefasst sind.

## Claims

1. Heat storage unit (1) having a conduit arrangement (2) for conveying a heat-transporting fluid, the heat storage unit comprising at least one storage block (3) filled with PCM material (4),
- the conduit arrangement (2) being guided through the storage block (3),
- the storage block (3) being designed as a bundle of a plurality of parallel, longitudinally extended, closed hollow chambers, which tightly abut one another by wall portions of their circumferential wall (12) and are each filled with PCM material (4),
- the abutting circumferential walls (12) each being provided with indentations (13) extending in the longitudinal direction, the indentations (13) in the circumferential walls (12) of a plurality of adjacent hollow chambers combining in cross section to form a closed, in particular circular, ring, and
- the conduit arrangement (2) comprising at least one conduit (20) having a plurality of conduit portions (23), which are heat-conductingly connected in the indentations (13), in direct contact or in contact established via a heat-conducting means, to the adjoining regions of the circumferential wall (12) and, thereby, to the PCM material (4), and
- the hollow chambers each being formed by all-round enclosed hollow profile bars (10) which, except for the indentations (13), have a polygonal, in particular square or rectangular, cross section,
**characterized in that**,
in the cross-sectional plane extending in the x-y direction, a plurality of hollow chambers are arranged so as to adjoin one another by their circumferential walls (12) in both the x-direction and the y-direction of the storage block (3), and **in that** the indentations (13) are arranged along the edges of the circumferential wall (12) with respect to an imaginary non-indented shape.

2. Heat storage unit according to claim 1,
**characterized in that**
the circumferential walls (12) of the hollow chambers consist of metal, in particular aluminum.

3. Heat storage unit according to any of the preceding claims,
**characterized in that**
the conduit portions (23) consist of metal, in particular copper.

4. Heat storage unit according to any of the preceding claims,
**characterized in that**
the conduit arrangement (2) has at least one inlet portion (21) and at least one outlet portion (22) for connection to a storage water heater.

5. Heat storage unit according to any of the preceding claims,
**characterized in that**
a plurality of storage blocks (3) which abut one another in the longitudinal direction and/or are next to one another in the transverse direction are combined to form a storage block unit.

## Revendications

1. Unité d'accumulation de chaleur (1) comportant un agencement de conduite (2) permettant de faire circuler un fluide caloporteur, comportant au moins un bloc d'accumulation (3) rempli d'un matériau MCP (4), dans laquelle
- l'agencement de conduite (2) traverse le bloc d'accumulation (3),
- le bloc d'accumulation (3) est conçu comme un ensemble de plusieurs chambres creuses fermées, s'étendant longitudinalement, parallèles les unes aux autres et comportant des sections de paroi de leur paroi circonférentielle (12) adjacentes les uns aux autres de manière étanche, lesquelles chambres creuses sont respectivement remplies d'un matériau MCP (4),
- les parois circonférentielles (12) adjacentes les unes aux autres sont respectivement pourvues de concavités (13) s'étendant dans la direction longitudinale, dans laquelle les concavités (13) dans les parois circonférentielles (12) de plusieurs chambres creuses adjacentes les unes aux autres se complètent en section transversale pour former un anneau fermé, en particulier circulaire, et
- l'agencement de conduite (2) présente au moins une conduite (20) comportant plusieurs sections de conduite (23) qui sont reliées aux zones adjacentes de la paroi circonférentielle (12) et, par-dessus, au matériau MCP (4), de manière à transporter la chaleur dans les concavités (13) en contact direct ou fabriqué par l'intermédiaire d'un moyen thermoconducteur, et
- les chambres creuses sont respectivement formées à partir de barres profilées creuses (10) fermées sur tout leur pourtour qui présentent une section transversale polygonale, en particulier carrée ou rectangulaire, à l'exception des concavités (13),
**caractérisée en ce**
**que** sont disposées, de manière à être adjacentes les unes aux autres, dans le plan de section transversale s'étendant selon les directions x et y, tant dans la direction x que dans la direction y du bloc d'accumulation (3), plusieurs chambres creuses avec leurs parois périphériques (12), et
**que** les concavités (13) sont disposées, par rapport à une forme imaginaire non concave, le long des bords de la paroi circonférentielle (12).

2. Unité d'accumulation de chaleur selon la revendication 1,
**caractérisée en ce**
**que** les parois circonférentielles (12) des chambres creuses sont constituées de métal, en particulier d'aluminium.

3. Unité d'accumulation de chaleur selon l'une des revendications précédentes,
**caractérisée en ce**
**que** les sections de conduite (23) sont constituées de métal, en particulier de cuivre.

4. Unité d'accumulation de chaleur selon l'une des revendications précédentes,
**caractérisée en ce**
**que** l'agencement de conduite (2) présente au moins une section d'entrée (21) et au moins une section de sortie (22) pour le raccordement à un accumulateur d'eau chaude.

5. Unité d'accumulation de chaleur selon l'une des revendications précédentes,
**caractérisée en ce**
**que** plusieurs blocs d'accumulation (3), adjacents les uns aux autres dans la direction longitudinale et/ou disposés les uns à côté des autres dans la direction transversale, sont regroupés pour former une unité à blocs d'accumulation.
